# EUROPÄISCHE PATENTSCHRIFT

(11) **EP 2 280 857 B1**
(45) Veröffentlichungstag und Bekanntmachung des Hinweises auf die Patenterteilung: **11.07.2012**
(21) Anmeldenummer: 09753719.5
(22) Anmeldetag: 03.04.2009
(51) Int. Cl.: B60W 30/02, B60W 20/00, B60L 7/18

(54) **VERFAHREN ZUM REGELN EINES SCHLEPPMOMENTES EINES ELEKTROMOTORISCH ANGETRIEBENEN KRAFTFAHRZEUGES UNTER BERÜCKSICHTIGUNG DES AUF DER FAHRBAHNOBERFLÄCHE VORLIEGENDEN REIBWERTES UND VORRICHTUNG ZUM DURCHFÜHREN EINES SOLCHEN VERFAHRENS**
METHOD FOR REGULATING A DRAG TORQUE OF A MOTOR VEHICLE DRIVEN BY AN ELECTRIC MOTOR IN CONSIDERATION OF THE FRICTION COEFFICIENT PRESENT ON THE ROADWAY SURFACE, AND DEVICE FOR CARRYING OUT SUCH A METHOD
PROCEDE DE REGLAGE D'UN COUPLE DE TRAINEE D'UN VEHICULE A MOTEUR ENTRAINE PAR UN MOTEUR ELECTRIQUE EN TENANT COMPTE DU COEFFICIENT DE FROTTEMENT SUR LA SURFACE D'UNE BANDE DE CIRCULATION ET DISPOSITIF POUR METTRE EN OEUVRE UN TEL PROCEDE

(30) Priorität: 26.05.2008 DE 102008001973
(43) Veröffentlichungstag der Anmeldung: 09.02.2011
(73) Patentinhaber: Robert Bosch GmbH, 70442 Stuttgart (DE)
(72) Erfinder: GOTTWICK, Ulrich, 70192 Stuttgart (DE); BINDER, Juergen, 70794 Filderstadt-Plattenhardt (DE)
(86) Internationale Anmeldenummer: PCT/EP2009/053991
(87) Internationale Veröffentlichungsnummer: WO 2009/144064

(56) Entgegenhaltungen:
- EP-A- 1 205 328
- EP-A- 1 449 700
- EP-A- 1 785 309
- EP-A- 1 905 637
- DE-A1-102007 051 590
- US-A1- 2005 099 146
- US-A1- 2007 046 099
- US-A1- 2007 222 287
- US-A1- 2008 079 311
- US-B1- 6 687 593

## Beschreibung

### Stand der Technik

Die Erfindung betrifft ein Verfahren zum Regeln eines Schleppmomentes eines elektromotorisch angetriebenen Kraftfahrzeugs, wobei eine Regelvorrichtung bei entsprechender Veränderung der Stellung eines Fahrpedals das Schleppmoment beeinflusst.

Die am häufigsten genutzte Kraftfahrzeugart verwendet derzeit Verbrennungsmotoren. An das verzögernde Verhalten des Fahrzeuges beim "vom Gas gehen" hat sich der durchschnittliche Fahrzeugführer solcher Kraftfahrzeuge im Laufe der letzten Jahrzehnte gewöhnt. Aufgrund der veränderten Umweltbedingungen ist es derzeit immer häufiger zum Einsatz von elektromotorischen Fahrzeugen gekommen.

Sowohl elektromotorisch als auch verbrennungsmotorisch angetriebene Kraftfahrzeuge weisen ein Fahrpedal auf, auf das ein Fahrzeugführer mit dem Fuß einwirkt, um die Geschwindigkeit zu bestimmen.

Fahrzeuge mit elektrischem Antriebsmotor erzeugen jedoch kein nennenswertes Motorschleppmoment. Um das bisher gewohnte Motorschleppmomentverhalten nun auch bei elektromotorisch angetriebenen Kraftfahrzeugen nachzubilden, ist man dazu übergegangen, das Schleppmoment entsprechend zu regeln.

Außer einem konventionellen Bremseingriff besteht dazuauch die Möglichkeit des Eingriffes über den auch als E-Maschine bezeichneten Elektromotor selbst einzugreifen.

Diesbezüglich bekannte Systeme rufen regeneratives und/oder rekuperatives Bremsen unter Nutzung der Generatoreigenschaften eines fremdangetriebenen elektrischen Antriebsmotors aus, so dass elektrische Energie, z. B. einem Akkumulator, zuführbar ist. Ein solches Systems ist aus der DE 10 2004 023 619 A1 bekannt. Alternativ zur Nutzung des Elektromotors in einem Generatorbetrieb ist es auch möglich, zusätzliche elektrische Verbraucher zuzuschalten, oder einen ohmschen Widerstand zuzuschalten. Auch EP 1 905 637 A beschreibt ein system mit dem Verfahren nach dem Oberbegriff des Anspruchs 1.

Bei bestehenden Regelungen zum Nachstellen eines Schleppmomentes tritt jedoch der Nachteil auf, dass bei glatter Fahrbahnoberfläche, etwa bedingt durch Glatteis oder Schnee während des Auftretens des künstlichen Schleppmomentes die Räder des Kraftfahrzeuges in Schlupf gelangen. Ein solcher Schlupf ist jedoch nicht erwünscht, da er einer exakten Kontrolle des Kraftfahrzeuges zuwider läuft.

### Offenbarung der Erfindung

Angesichts des skizzierten Standes der Technik, liegt der Erfindung die Aufgabe zugrunde, die Nachteile aus dem Stand der Technik zu vermeiden.

Diese Aufgabe wird gattungsgemäß dadurch erreicht, dass eine Sensorvorrichtung einen Reibwert einer Fahrbahnoberfläche, auf der das Kraftfahrzeug sich befindet, sensiert und einer Rechenvorrichtung zur Verfügung stellt, wobei die Rechenvorrichtung die Regelvorrichtung veranlasst, das Schleppmoment in Abhängigkeit vom Reibmoment anzupassen.

### Vorteile der Erfindung

Das Fahrverhalten wird durch diese präventive Maßnahme wesentlich stabiler, weil kein Bremsschlupf mehr sensiert und nachfolgend ausgeglichen werden muss. Die sonst notwendigen Gegenmaßnahmen können unterbleiben. Durch das den Fahrbahnverhältnissen angepasste Nachbilden des Schleppmomentverhaltens wird die Blockierneigung an den Rädern, insbesondere an den Antriebsrädern des Kraftfahrzeuges reduziert, was zu einem sichereren fahrdynamischen Verhalten des Kraftfahrzeuges führt. Das übliche aktive Gasgeben, um ein Durchrutschen der Räder bei gewünschter Geschwindigkeitsverlangsamung des Fahrzeuges zu verhindern, kann unterbleiben. Die Bedienbarkeit des Kraftfahrzeuges wird erhöht.

Vorteilhafte Ausgestaltungsformen werden nachfolgend näher beschrieben und in den Unteransprüchen beansprucht.

Es ist von Vorteil, wenn die Sensorvorrichtung ein Teil einer ESP-Vorrichtung ist. Unter einer ESP-Vorrichtung wird die Gesamtheit aller Einrichtungen verstanden, die im Rahmen von Electronic Stability Programs (ESP) Verwendung finden. Die Sensorvorrichtung ermittelt fahrdynamische Mess- und Regelgrößen, die Rückschlüsse auf die Fahrbahnbeschaffenheit zulassen. Dabei können vorteilhafterweise auch sonstige von ESP-Vorrichtungen zur Verfügung gestellte und genutzte Parameter verwendet werden, wie z. B. Umgebungstemperatur, Radsignale, Fahrzeugverzögerung beim Bremsen, Radbremsdrücke, Fahrzeugbeschleunigung, Dauer und Anzahl der ESP-Eingriffe, Lenkwinkel, Gier-Geschwindigkeit um die Fahrzeughochachse, Fahrzeugquerbeschleunigung und evtl. auch Daten eines Navigationssystems. In einer Rechenvorrichtung werden diese Parameter in eine Information umgerechnet, die den Reibwert der Fahrbahnoberfläche charakterisiert.

Besonders gut nachfühlbar lässt sich das Schleppmoment dann realisieren, wenn die Regelvorrichtung das Zuschalten eines Generators oder Umschalten eines Elektromotors in den Generatorbetrieb hervorruft.

Wenn die Regelvorrichtung einen Bremseingriff hervorruft, so ist für den Fahrzeugführer das verzögernde Element, was bei verbrennungsmotorisch betriebenen Kraftfahrzeugen durch das Schleppmoment erreicht wird, besonders gut fühlbar und besonders einfach regelbar nachgebildet.

Um einen sanften Verlauf des Schleppmomentes und eine eventuelle Reduzierung des Schleppmomentes bei zu niedrigem Reibwert zu erzielen, ist es von Vorteil, wenn das Schleppmoment langsam reduziert wird, sobald der sensierte Reibwert über einem Grenzwert liegt.

Wenn der Grenzwert fest voreingestellt ist oder an das Fahrverhalten eines Fahrzeugführers angepasst ist, so ist entweder für jedes Fahrzeug dasselbe Verhalten reproduzierbar oder aber das Regelverhalten an das fahrdynamische Verhalten eines speziellen Fahrzeugführers anpassbar.

Wenn das Kraftfahrzeug, nachdem es über einen Fahrbahnabschnitt mit niedrigem Reibwert gefahren ist, wieder auf einen Fahrbahnabschnitt mit hohem Reibwert trifft, ist es von Vorteil, wenn das Schleppmoment wieder erhöht wird, sobald nach Überschreiten des Grenzwertes durch den Reibwert dieser Grenzwert wieder unterschritten wird. Um auf einem nach einem glatten fahrbaren Fahrbahnabschnitt befahrenen griffigen Fahrbahnabschnitt wieder auf das gewohnte verzögernde Moment, nämlich das Schleppmoment, zurückgreifen zu können, ist diese Ausführungsform von besonderem Vorteil.

Besonders vorteilhaft ist es in einem solchen Fall, wenn das Moment langsam wieder erhöht wird. Ruckartige Veränderungen, Momentensprünge oder dergleichen werden dadurch vermieden.

Die Erfindung betrifft auch eine Vorrichtung, die Mittel aufweist, die geeignet zum Durchführen eines erfindungsgemäßen Verfahrens ist. Solch eine Vorrichtung bietet den Vorteil, dass sie auch in bereits gefertigten Kraftfahrzeugen nachträglich eingebaut und eingesetzt werden kann.

### Kurze Beschreibung der Zeichnungen

Anhand der Zeichnung wird die Erfindung nachstehend eingehender beschrieben. Es zeigt:
- Figur 1: eine schematische Darstellung eines Fahrzeuges mit einem elektromotorischen Antrieb,
- Figur 2: das Ablaufdiagramm in schematischer Form gemäß des erfindungsgemäßen Verfahrens und
- Figur 3: den Verlauf des Schleppmomentes in Abhängigkeit von der Stellung des Fahrpedals, des Bremspedals und dem Reibwert auf der Fahrbahnoberfläche.

### Ausführungsformen der Erfindung

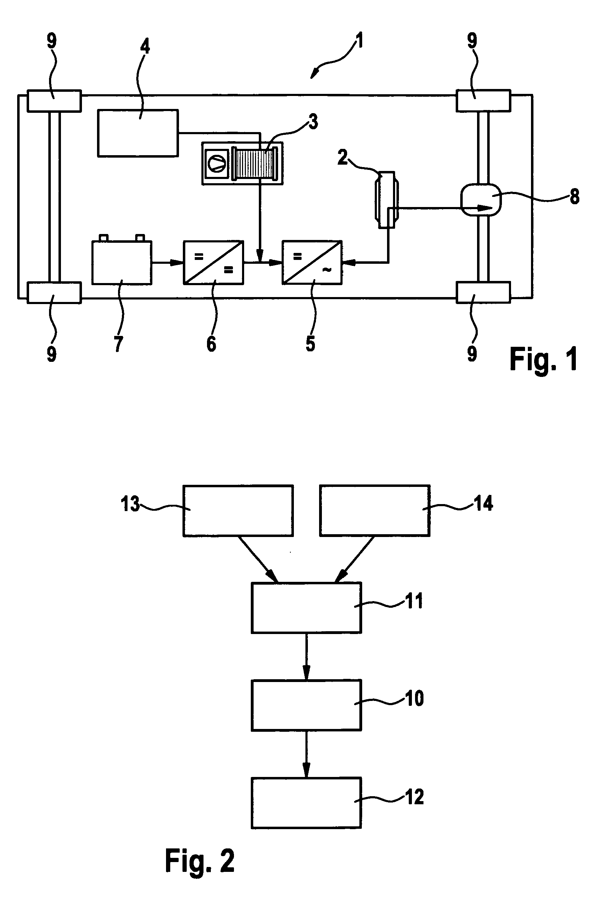

Figur 1 zeigt ein elektromotorisch angetriebenes Kraftfahrzeug 1. Im dargestellten Ausführungsbeispiel ist ein Brennstoffzellenfahrzeug dargestellt. Das Kraftfahrzeug 1 weist eine Elektromaschine auf, die als Elektromotor 2 fungiert. Der Elektromotor 2 ist in einen Generatorbetrieb umschaltbar. Der Elektromotor 2 produziert im Generatorbetrieb, wie ein Generator, Strom.

Eine Brennstoffzelle 3 entnimmt einem Wasserstofftank 4 Brennstoff und wandelt diesen in Energie. Die Energie wird einem Pulswechselrichter 5 und einem Stromwandler 6 zugeführt. Der Stromwandler 6 ist dabei als DC/DC-Konverter ausgestaltet. Der Stromwandler 6 regelt das Lade-/ und Entladeverhalten eines Akkumulators 7.

Die von der Brennstoffzelle 3 gelieferte Energie wird über den Pulswechselrichter 5 dem Elektromotor 2 zugeführt, der dann unter Zwischenschaltung einer Kupplungs- und Getriebeeinheit 8 die Energie den Rädern 9 des Kraftfahrzeuges 1 zuführt. Die Räder 9 werden mit Hilfe des Elektromotors 2 gedreht, wobei die Energie durch die Kupplungs- und Getriebeeinheit entsprechend bedarfsgerecht zugeführt wird.

Der Kraftverlauf ist in der Fig. 1 durch Pfeile symbolisiert.

In Figur 2 ist ein schematischer Ablauf des erfindungsgemäßen Verfahrens dargestellt. Eine Regelvorrichtung 10 erhält von einer Rechenvorrichtung 11 ein Auslösesignal, so dass die Regelvorrichtung 10 Maßnahmen 12 auslöst, die zu einer Verringerung des Schleppmomentes führen. Der Rechenvorrichtung 11 werden von einer Sensorvorrichtung 13 Daten zugeführt, die den Reibwert auf der Fahrbahnoberfläche repräsentieren. Eine Fahrpedalpositionsbestimmungsvorrichtung 14 liefert zusätzlich Information und Daten bzgl. der Stellung des Fahrpedals an die Rechenvorrichtung 11.

Wird aus einer Position, in der das Fahrpedal den Vortrieb steuert, das Fahrpedal in eine neutrale Position bewegt, also in eine Position, in der keine zusätzliche Beschleunigung bewirkt wird im Sinne, dass "Gas zurückgenommen" wird, und wird eine glatte Fahrbahnoberfläche durch die Sensorvorrichtung 13 detektiert, so ruft die Regelvorrichtung 10 Maßnahmen hervor, die zur Verringerung des Schleppmomentes führen.

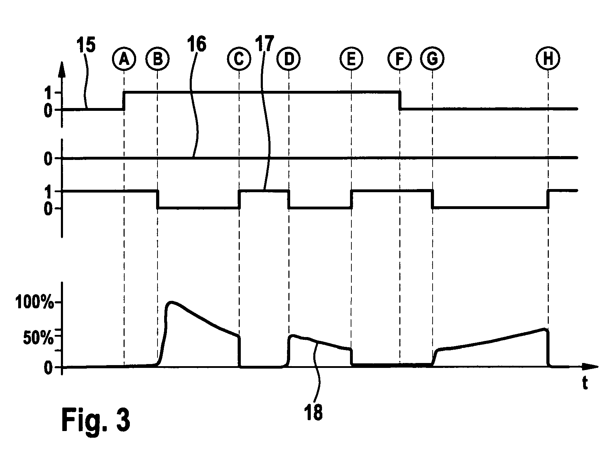

Während bei normaler Fahrbahnoberflächenbeschaffenheit, also ausreichend großem Reibwert bei "Wegnehmen des Gases" eine künstliche Verzögerung, also eine Erhöhung des Schleppmomentes hervorgerufen wird, so wird nun nur noch wenig Schleppmoment künstlich hinzugeführt, um ein Blockieren der Räder 9 zu verhindern. Die spezielle Wirkungsweise wird auch durch Studium der Figur 3 deutlich.

In Figur 3 ist mittels eines Graphen 15 der Verlauf des Reibwertes auf der Fahrbahnoberfläche dargestellt. Dabei springt der Reibwert zwischen dem Wert 0, also dem Wert, an dem ein großer Reibwert als ausreichend definiert ist und dem Wert 1, an dem der vorliegende Reibwert als niedrig definiert ist.

Ein Graph 16 stellt die Position des Bremspedals dar, zeigt also, dass während des gesamten Zeitverlaufes t das Bremspedal unverändert bleibt.

Während das Bremspedal immer in derselben Position verbleibt, ändert sich die Position des Fahrpedals, wie durch den Graphen 17 dargestellt. Das Fahrpedal wechselt zwischen einer Position in einer gedrückten Stellung, also in der Position "1" und einer ungedrückten Position, also der Position "0".

Der Verlauf des Schleppmomentes ist mit Hilfe eines Graphen 18 dargestellt.

Der Fahrzeugführer fährt mit dem Kraftfahrzeug bis zum Moment A auf einer Fahrbahn, die einen "normalen" Fahrbahnreibwert aufweist, also einem ausreichend hoch definierten Reibwert. Zum Zeitpunkt A liefert eine ESP-Vorrichtung, die die Sensorvorrichtung 13 umfasst, Informationen bzgl. eines abgesenkten Reibwertes. Ab diesem Zeitpunkt muss bis zum Zeitpunkt F von einem niedrigen Reibwert ausgegangen werden.

Zum Zeitpunkt B geht der Fahrer vom Gas und hat in dem Fall, in dem die erfindungsgemäße Vorrichtung oder das erfindungsgemäße Verfahren nicht eingesetzt ist, ein hohes künstliches, also gelerntes Schleppmoment im Kraftfahrzeug 1, was dazu führt, dass die Räder in Schlupf übergehen können. Herkömmliche Regulationsmechanismen, wie eine Erhöhung der Motordrehzahl zur Verringerung des Schleppmomentes müssten eingreifen. Eine erfindungsgemäße Lösung wird zum Zeitpunkt D erreicht.

Während zum Zeitpunkt C wieder beschleunigt wurde, greift zum Zeitpunkt D nun ein erfindungsgemäßes Verfahren ein und senkt das Motorschleppmoment ab. Der Schleppmomentanteil wird reduziert, wobei zuerst ein Bremsenanteil weggelassen wird, um die Bremsen zu entlasten und ein "In Schlupf Gehen" der Räder 9 zu verhindern.

Falls der durch das Hinzuschalten der Bremsen sonst hervorgerufene Schleppmomentanteil nicht ausreichend groß zur Reduzierung des Schleppmomentes ist, wird auch der generatorische Anteil des Schleppmomentes durch Abschalten des Generators oder Nicht-Umschalten des Elektromotors in Generatorbetrieb weiter reduziert.

Zum Zeitpunkt E wird Gas gegeben und zum Zeitpunkt F erhöht sich der Reibwert wieder auf einen normalen Wert. Nun wird das Schleppmoment im Bedarfsfall, hier zum Zeitpunkt G, zu dem der Fahrzeugführer das Gas wieder wegnimmt, langsam wieder erhöht, bis der Ursprungswert erreicht ist.

Wie dem Verlauf des Graphen 15, also der Darstellung des Reibwertes, zu entnehmen ist, findet eine digitale Unterscheidung statt, ab wann ein Reibwert als unterschritten zu gelten hat. In einem solchen Fall hat der Graph das Niveau "1".

## Patentansprüche

1. Verfahren zum Regeln des Schleppmomentes eines elektromotorisch angetriebenen Kraftfahrzeugs (1), wobei eine Regelvorrichtung (10) bei entsprechender Veränderung der Stellung eines Fahrpedals das Schleppmoment beeinflusst, **dadurch gekennzeichnet , dass** eine Sensorvorrichtung (13) einen Reibwert einer Fahrbahnfläche, auf der das Kraftfahrzeug (1) sich befindet, sensiert und einer Rechenvorrichtung (11) zur Verfügung stellt, wobei die Rechenvorrichtung (11) die Regelvorrichtung (10) veranlasst, das Schleppmoment in Abhängigkeit von Reibwert anzupassen, wobei die Anpassung derart erfolgt, dass das bei verbrennungsmotorisch betriebenen Fahrzeugen beim Loslassen des Fahrpedals sich einstellende verzögernde Verhalten nachgebildet wird.

2. Verfahren nach Anspruch 1, wobei die Sensorvorrichtung (2) ein Teil einer ESP-Vorrichtung ist.

3. Verfahren nach Anspruch 1 oder 2, wobei die Regelvorrichtung (10) das Zuschalten eines Generators oder Umschalten eines Elektromotors (2) in den Generatorbetrieb hervorruft.

4. Verfahren nach einem der Ansprüche 1 bis 3, wobei die Regelvorrichtung ( 10) einen Bremseingriff hervorruft.

5. Verfahren nach einem der Ansprüche 1 bis 4, wobei das Schleppmoment langsam reduziert wird, wenn der sensierte Reibwert über einem Grenzwert liegt.

6. Verfahren nach Anspruch 5, wobei der Grenzwert fest voreingestellt oder an das Fahrverhalten eines Fahrzeugführers angepasst ist.

7. Verfahren nach einem der Ansprüche 5 oder 6, wobei das Schleppmoment wieder erhöht wird, wenn nach Überschreiten des Grenzwertes durch den Reibwert der Grenzwert wieder unterschritten wird.

8. Verfahren nach Anspruch 7, wobei das Schleppmoment langsam wieder erhöht wird.

9. Vorrichtung enthaltend Mittel geeignet zum Durchführen des Verfahrens nach einem der Verfahrensansprüche.

## Claims

1. Method for controlling the drag torque of a motor vehicle (1) which is driven by an electric motor, with a control apparatus (10) influencing the drag torque when there is a corresponding change in the position of an accelerator pedal, **characterized in that** a sensor apparatus (13) senses a coefficient of friction of a carriageway surface on which the motor vehicle (1) is located and makes it available to a computation apparatus (11), with the computation apparatus (11) prompting the control apparatus (10) to adjust the drag torque as a function of the coefficient of friction, with the adjustment being performed in such a way that the deceleration behaviour which is produced in vehicles which are driven by an internal combustion engine when the accelerator pedal is released is replicated.

2. Method according to Claim 1, with the sensor apparatus (2) being part of an ESP apparatus.

3. Method according to Claim 1 or 2, with the control apparatus (10) causing a generator to be connected or an electric motor (2) to be changed over to the generator mode.

4. Method according to one of Claims 1 to 3, with the control apparatus (10) causing a braking intervention.

5. Method according to one of Claims 1 to 4, with the drag torque being slowly reduced when the sensed coefficient of friction is above a limit value.

6. Method according to Claim 5, wherein the limit value is fixedly preset or is matched to the driving behaviour of a vehicle driver.

7. Method according to either of Claims 5 and 6, with the drag torque being increased again when the coefficient of friction, after exceeding the limit value, falls below the limit value again.

8. Method according to Claim 7, with the drag torque being slowly increased again.

9. Apparatus comprising means which is suitable for carrying out the method according to one of the method claims.

## Revendications

1. Procédé de réglage du couple résistant d'un véhicule automobile (1) entraîné par un moteur électrique, dans lequel un dispositif de réglage (10) influence le couple résistant lors d'une variation correspondante de la position d'une pédale d'accélérateur, **caractérisé en ce qu'**un dispositif de capteur (13) détecte un coefficient de friction d'une surface de la route sur laquelle se trouve le véhicule automobile (1) et le fournit à un dispositif de calcul (11), le dispositif de calcul (11) permettant au dispositif de réglage (10) d'adapter le couple résistant en fonction du coefficient de friction, l'adaptation s'effectuant de manière à reproduire le comportement de ralentissement s'établissant dans des véhicules entraînés par des moteurs à combustion interne lors du relâchement de la pédale d'accélérateur.

2. Procédé selon la revendication 1, dans lequel le dispositif de capteur (2) constitue une partie d'un dispositif de contrôle de stabilité de conduite (ESP).

3. Procédé selon la revendication 1 ou 2, dans lequel le dispositif de réglage (10) provoque la commutation d'un générateur ou le passage d'un moteur électrique (2) en mode de générateur.

4. Procédé selon l'une quelconque des revendications 1 à 3, dans lequel le dispositif de réglage (10) provoque une intervention de freinage.

5. Procédé selon l'une quelconque des revendications 1 à 4, dans lequel le couple résistant est réduit lentement, lorsque le coefficient de friction détecté est supérieur à une valeur limite.

6. Procédé selon la revendication 5, dans lequel la valeur limite est préajustée fixement ou est adaptée au comportement de conduite du conducteur du véhicule.

7. Procédé selon l'une quelconque des revendications 5 ou 6, dans lequel le couple résistant est à nouveau augmenté si, après le dépassement de la valeur limite par le coefficient de friction, celui-ci redescend à nouveau en dessous de la valeur limite.

8. Procédé selon la revendication 7, dans lequel le couple résistant est à nouveau augmenté lentement.

9. Dispositif contenant des moyens adaptés pour mettre en oeuvre le procédé selon l'une quelconque des revendications précédentes.
